# EUROPEAN PATENT SPECIFICATION

(11) **EP 4 547 414 B1**
(45) Date of publication and mention of the grant of the patent: **08.04.2026**
(21) Application number: 23748115.5
(22) Date of filing: 29.06.2023
(51) Int. Cl.: B21B 15/00, B23K 11/04

(54) **WELDING MACHINE**
SCHWEISSMASCHINE
MACHINE DE SOUDAGE

(30) Priority: 30.06.2022 IT 202200013807
(43) Date of publication of application: 07.05.2025
(73) Proprietor: Danieli & C. Officine Meccaniche S.p.A., 33042 Buttrio (IT)
(72) Inventor: RUSSIAN, Daniele, 33013 Gemona del Friuli (IT); TOMAT, Claudio, deceased (IT)
(74) Representative: Celona, Antonio
(86) International application number: PCT/IB2023/056739
(87) International publication number: WO 2024/003802

(56) References cited:
- EP-A1- 0 868 250
- EP-A1- 3 812 055
- WO-A1-2021/156738
- JP-A- 2003 019 502

## Description

### Field of the invention

The present invention relates to a welding machine, preferably of the flash welding type, for long metal products, e.g. billets, bars or blooms, suitable to weld the tail and head of two consecutive longitudinal products to each other along a roller table, usually arranged upstream of a rolling mill.

### Background art

In rolling mills, in particular of the endless operating type, the metal products from the casting machine or from external warehouses are welded together and then seamlessly rolled.

The metal products which are welded are typically semi-finished metallurgical products, e.g. such as, billets, bars or blooms.

The welding is carried out by joining the tail of one product to the head of the successive product.

The welding is achieved by means of electric shocks generated by power supplies connected to the products to be welded. This technology is known as flash welding.

During welding, the products must be effectively locked. To this end, clamping means are provided, which serve to keep the products in place during welding and often act also as conductors of the welding electric current.

Such clamping means conventionally comprise elements, in particular clamps, which come directly into contact with the products to be welded. Gradually as the welding is carried out, the clamps, which hold the head and tail of the products to be welded, are brought close by hydraulic cylinders, called upsetting cylinders. This operation is necessary to join the ends to be welded, in order to eliminate any inclusions and air bubbles, and to compensate for the loss of material determined by the melting in the form of burrs, and to allow the effective adhesion between the two components being welded, which form a joint, called a weld joint.

A known type of flash welding machine generally comprises two structures, each provided with a pair of clamps, the structures being substantially parallel to each other and inclined at an angle of about 45° relative to the plane defined by the carriage supporting the machine. Said inclination allows a uniform application of the contact force of the clamps with the product on the sides thereof, thus allowing its optimum retention and centering.

Generally, the transformer, provided with conductors connected to the two structures to supply electric current to the tail and head of the two products to be welded, is located above the inclined upper surfaces of the two structures, which makes access and, consequently, maintenance of the internal parts of the machine difficult.

A welding machine was developed in the last few years, described in WO2021156738A1, which provides the transformer fixed to the carriage and supported by the latter in a part thereof arranged laterally outside another part of the carriage, which instead supports both structures equipped with clamps. This part of carriage which supports the two structures is delimited by a first beam and a second beam of the carriage that are parallel to the feeding direction of the metal product.

In this solution, the two upsetting cylinders are arranged parallel to each other on a horizontal plane. A first upsetting cylinder is arranged below the shoulders, i.e. below the lower inclined surfaces, of the two structures. The second upsetting cylinder is instead arranged substantially at the feet of the two inclined structures, on the opposite side with respect to the side where the first cylinder is positioned.

If on the one hand this solution allows top access with consequent facilitated maintenance of certain internal parts of the machine which are accessible and liftable from the top by means of an overhead crane, disadvantageously on the other hand, maintenance of the clamps continues not being easy, the clamps being the part of the machine most prone to wear and which involve the servicing thereof and manual replacement by operators who must get inside the machine.

Indeed, to access the clamp maintenance area, the operator is in front of the second upsetting cylinder, arranged at the feet of the two inclined structures. This second upsetting cylinder occupies an area arranged completely, or at least partially, above the lower clamps so that disassembling said second upsetting cylinder is needed in order to obtain a space which allows the clamp maintenance area to be comfortably accessed.

Thus, the need is felt to solve at least the aforesaid drawback by providing a welding machine which is capable of providing easier clamp maintenance by making the operating space for performing maintenance easy to access.

### Summary of the invention

It is an object of the present invention to make a welding machine, preferably of the flash welding type, which allows easy lateral access to the clamp maintenance area, with minimum need to disassemble, reassemble and align components, thus allowing quick maintenance and cleaning thereof; at the same time, providing the possibility to operate with common aids, such as cranes and overhead cranes, to remove the heavy components relative to the clamp holder structures.

It is another object of the present invention to make a welding machine which is simple from a constructional point of view and which nonetheless, allows the known welding machines to perform the necessary movements.

It is a further object of the present invention to make a welding machine which makes it possible to increase safety for operators.

The present invention achieves at least one of such objects and other objects which will be apparent in light of the present description, by means of a welding machine, preferably of the flash welding type, for welding the tail of a first longitudinal metal product together with the head of a second longitudinal metal product along a feeding direction X of said longitudinal metal products, the machine comprising a carriage adapted to slide along the feeding direction X, said carriage supporting:
- a first structure connected to said carriage;
- first clamping means, provided on said first structure, for clamping the tail of the first metal product or the head of the second metal product;
- a second structure slidable relative to both the first structure and the carriage, parallel to the feeding direction;
- second clamping means, provided on said second structure, for clamping the head of the second metal product or the tail of the first metal product;
- at least one transformer provided with conductors connected to the first clamping means and to the second clamping means, respectively, to supply electric current to said tail and said head;

wherein the first structure and the second structure are supported in a first part of the carriage delimited by a first beam and a second beam of the carriage that are parallel to the feeding direction X, while the at least one transformer is fixed to the carriage and supported in a second part of the carriage, arranged laterally outside the first part,
wherein the first structure and the second structure define a respective longitudinal axis Z, Z' inclined, with respect to a horizontal plane, by a first acute angle;
wherein there are provided two upsetting cylinders arranged parallel to said feeding direction X to move the second structure either towards or away from the first structure along the feeding direction X,
wherein the axes of the two upsetting cylinders are arranged along a plane Y passing through a passage zone of the longitudinal metal products along the feeding direction X, said passage zone being delimited by said first clamping means and second clamping means;
wherein a first upsetting cylinder is arranged, at one side relative to said passage zone, at least partially under a first side of the first structure and the second structure, while a second upsetting cylinder is arranged at a further side relative to said passage zone, at the foot of a second side of the first structure and the second structure, opposite to the first side,
characterized in that said plane Y is inclined, with respect to said horizontal plane, by a second acute angle less than said first acute angle and different from zero.

Preferably, to suitably distribute the upsetting force without forcing the structures, said plane Y includes the longitudinal central axis of the passage zone of the longitudinal metal products along the feeding direction X, said passage zone being delimited by the lower clamping means and the upper clamping means in their metal product clamping position. This longitudinal passage zone will be occupied by the metal products in the welding area. Thus, it is preferable that the lower clamping means occupy a fixed position, while the upper clamping means are adjustable along the respective longitudinal axis Z, Z' of the corresponding structure.

A further advantage is given by the fact that the same possible maintenance of the lower upsetting cylinder is easier. Indeed, the innovative position of the lower upsetting cylinder makes the removal thereof easier.

Moreover, the new position of the upsetting cylinders makes it possible to install a larger spark containment device which is more effective at protecting the machine and operators.

Further features and advantages of the invention will become more apparent in the light of the detailed description of exemplary, but non-exclusive embodiments thereof.

The dependent claims describe particular embodiments of the invention.

### Brief description of the drawings

In the description of the invention, reference is made to the accompanying drawings, which are provided by way of non-limiting example, in which:
Figure 1 shows a perspective view of a welding machine according to the invention;
Figure 2 shows a partially sectional side view of the welding machine in Figure 1;
Figure 2a shows an enlargement of a part of the side view in Figure 2;
Figure 3 shows a perspective view of a portion of the welding machine in Figure 1;
Figure 4 shows a partially sectional side view of a second embodiment of a welding machine according to the invention.

The same reference numerals and letters in the figures identify the same elements or components.

### Description of exemplary embodiments of the invention

Some examples of a welding machine of the flash welding type according to the invention are illustrated with reference to the drawings.

In all the embodiments of the invention, the welding machine, which is suitable for welding the tail of a first longitudinal metal product to the head of a second longitudinal metal product along a feeding direction X of said longitudinal metal products, comprises a carriage 1 adapted to slide on at least two sliding guides 15, 16 along said feeding direction X, above a roller table (not shown) on which the longitudinal metal products, such as billets, blooms or bars, advance.

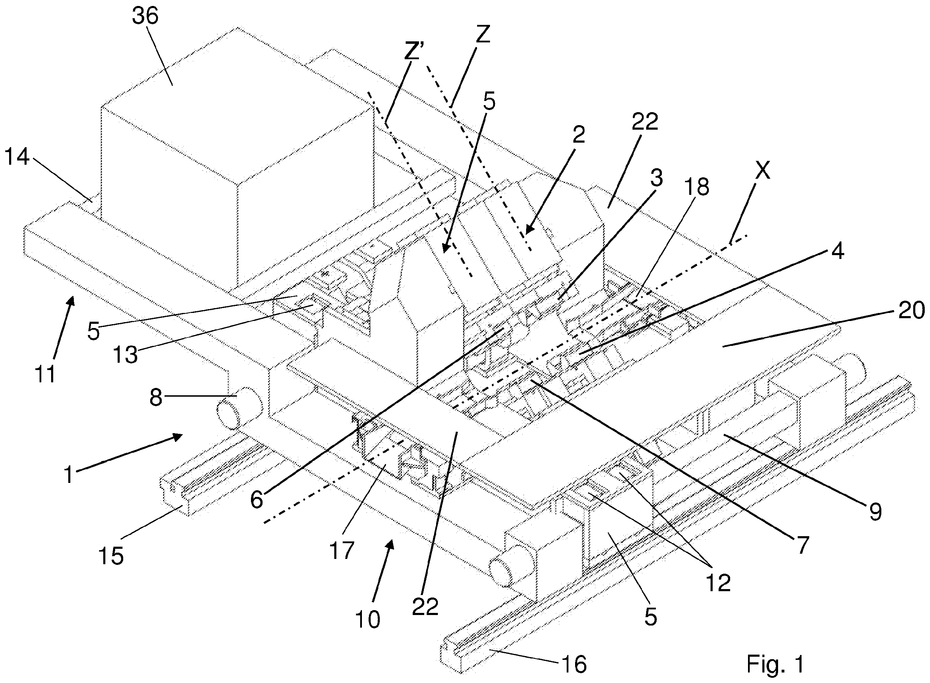

### Carriage 1 supports (Figure 1):

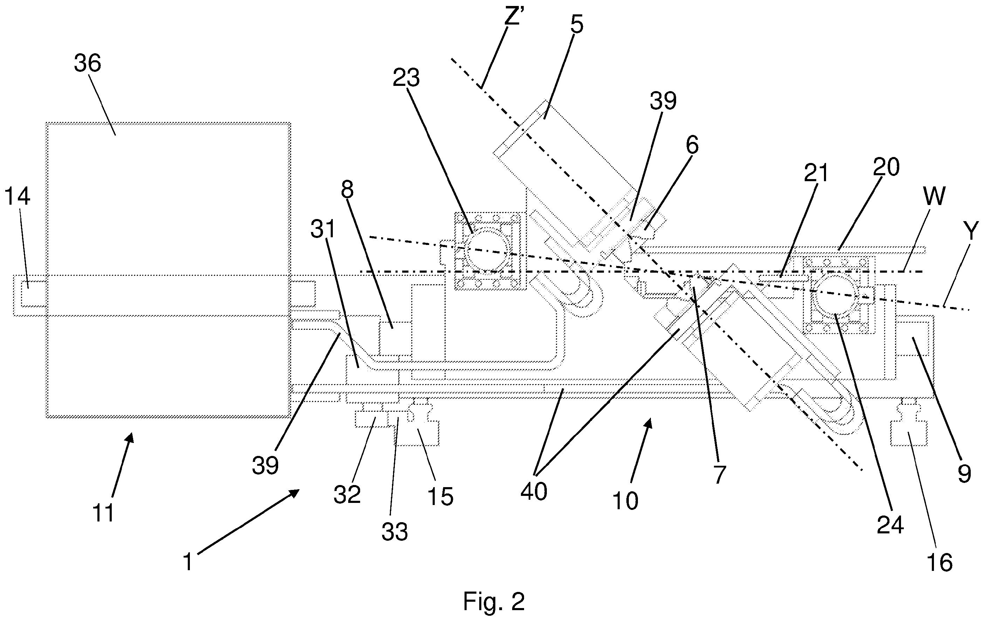

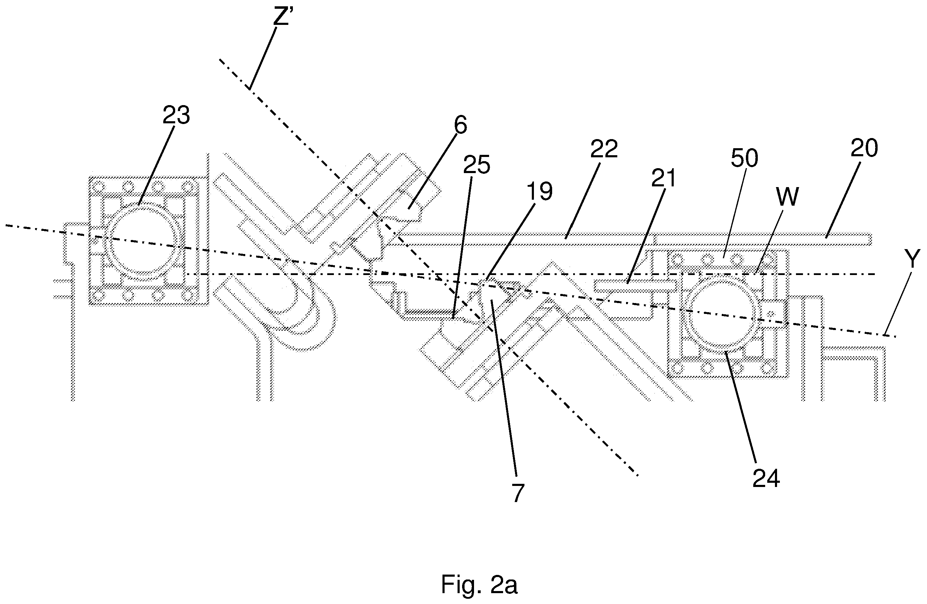

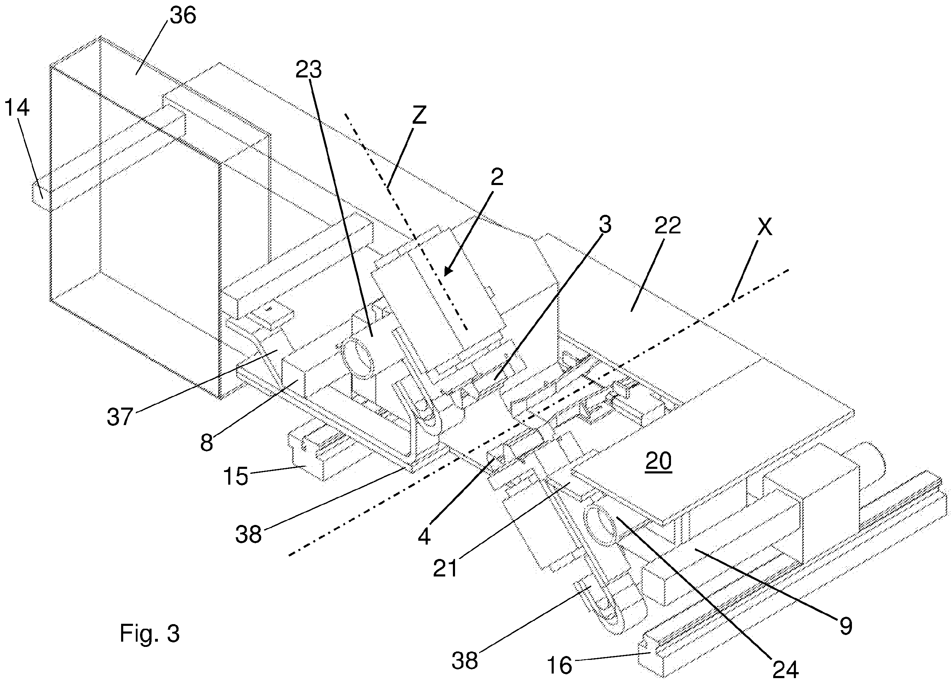

- a first structure 2 connected to carriage 1;
- first clamping means 3, 4, provided on the first structure 2, for clamping the tail of the first metal product or the head of the second metal product;
- a second structure 5, slidable with respect to both the first structure 2 and carriage 1, parallel to the feeding direction X;
- second clamping means 6, 7, provided on the second structure 5, for clamping the head of the second metal product or the tail of the first metal product;
- at least one transformer 36 provided with conductors 37, 38, 39, 40 (Figures 2 and 3) connected to the first clamping means 3, 4 and the second clamping means 6, 7, respectively, to supply electric current to said tail and said head.

The first structure 2 defines a longitudinal axis Z (Figures 1 and 3) which is inclined relative to a horizontal plane by a first acute angle preferably between 40° and 70°, e.g. 45°. The second structure 5, defining its own longitudinal axis Z' parallel to the longitudinal axis Z (Figures 1 and 2), is arranged parallel to the first structure 2 and spaced from the latter along the feeding direction X of the products to be welded.

In particular, the first clamping means 3, 4 of the first structure 2 comprise a respective upper clamp 3 and a respective lower clamp 4. Each clamp 3, 4 may be moved along axis Z by a respective moving system provided in structure 2.

The second clamping means 6, 7 of the second structure 5 comprise a respective upper clamp 6 and a respective lower clamp 7. Also in this case, each clamp 6, 7 may possibly be moved along axis Z' by a respective moving system provided in structure 5.

Such moving systems comprise, for example, hydraulic cylinders or jacks, or electric actuators or mechanical moving devices, such as cam or eccentric devices.

The movement, and therefore the adjustability, of all the clamps of the clamping means advantageously eliminates the need to have to incline or slightly rotate the two structures 2, 5 to prevent the metal product, e.g. the billet, from dragging on the lower clamps, which are fixed in the known machines of the prior art.

In an alternative variant, only the upper clamp 3 is movable along axis Z, while the lower clamp 4 is in a fixed position. Similarly, only the upper clamp 6 is movable along axis Z', while the lower clamp 7 is in a fixed position.

The welding machine of the invention provides adjustment means, comprising or consisting of two upsetting cylinders 23, 24 (Figures 2 and 3), arranged parallel to the feeding direction X, to move the second structure 5 close to or away from the first structure 2 along said feeding direction X. The approaching occurs in particular when the two products are flash welded.

The upsetting cylinders 23, 24 are pivoted at a first end thereof to the first structure 2 and at a second end thereof to the second structure 5 by means of respective pins.

The two upsetting cylinders 23, 24 are arranged (Figure 2, 2a) along a plane Y, defined by the longitudinal axes of the two upsetting cylinders 23, 24 and passing through a passage zone of the longitudinal metal products along the feeding direction X. This passage zone is delimited by the upper clamps 3, 6 and the lower clamps 4, 7.

In the variants illustrated, a first upsetting cylinder 23 is arranged, at one side relative to said passage zone, at least partially under a first side of the first structure 2 and of the second structure 5, while a second upsetting cylinder 24 is arranged at a further side relative to said passage zone, substantially at the foot of a second side of the first structure 2 and the second structure 5, opposite to the first side.

Advantageously, plane Y is inclined, with respect to said horizontal plane, by a second acute angle less than said first acute angle and different from zero. This configuration allows easy lateral access to the clamp maintenance area, along a direction transverse to the feeding direction X, allowing quick maintenance and cleaning thereof. Preferably, the second acute angle is less than or equal to 30°.

In a variant of the invention, the first upsetting cylinder 23 is arranged at a higher height than the second upsetting cylinder 24.

In a preferred variant, the lower clamping means 4, 7 of said first clamping means 3, 4 and said second clamping means 6, 7 occupy a fixed position, while the upper clamping means 3, 6 are adjustable along the respective longitudinal axis Z, Z' of the corresponding structure 2, 5. The upper horizontal plane W tangent to the second upsetting cylinder 24 is arranged above the upper end 19 of the lower clamping means 4, 7. However, the distance between the upper horizontal plane W and said upper end 19 of the lower clamping means 4, 7 is less than 20 mm, preferably less than 15 mm, e.g. comprised in a range from 8 to 12 mm.

Preferably, the lower clamping means 4, 7 define a horizontal flat surface 25 for resting the metal product, and the distance between said upper horizontal plane W and said horizontal flat surface 25 is in a range from 100 to 150 mm, preferably from 110 to 140 mm, according to the sizes of the metal products to be welded having polygonal cross section, e.g. square, such as billets, bars or blooms. For example, billets or blooms having the variable side in a range from 100 to 250 mm can be welded with the machine of the invention. The distance between the upper horizontal plane W and the horizontal flat surface 25 is maximum for products having a side of 250 mm, while it is minimum for products having a side of 100 mm.

The above-described configurations provide the possibility of installing a removable walkway 20 arranged above the second upsetting cylinder 24 and close to the lower clamping means 4, 7, which are easy for the operators to access.

In particular, the walkway 20 can be arranged above a frame 50 (Figure 2a), inside of which the second upsetting cylinder 24 is accommodated. Preferably, the distance between the upper surface of frame 50 and the upper end 19 of the lower clamping means 4, 7 is less than 70 mm, preferably less than 50 mm.

At least one step 21 may be provided between walkway 20 and the lower clamping means 4, 7 to allow the operator to approach the clamps even more easily, accessing the clamp maintenance area without the volume of the lower upsetting cylinder 24. Step 21 is arranged at a lower height with respect to walkway 20.

In a preferred particular case, the longitudinal central axis of the longitudinal passage zone of the metal products along the feeding direction X lies on plane Y, said passage zone being delimited by the lower clamping means 4, 7 and the upper clamping means 3, 6 in the clamping position of the metal product thereof, and which therefore is occupied by the metal products in the welding area.

Also in this case, it is preferable that the lower clamping means 4, 7 occupy a fixed position, while the upper clamping means 3, 6 are adjustable along the respective longitudinal axis Z, Z' of the corresponding structure.

In particular, to ensure the longitudinal central axis of the passage zone of the metal products is fixed and always lying on plane Y when the size of the metal product changes, it may be sufficient to use pads having different size, and therefore different thickness, at least for the lower clamping means 4, 7, according to the size of the products to be welded.

Therefore, advantageously it is preferable for the size, in particular the thickness, of the pads mounted on the clamping means, preferably on the lower clamping means 4, 7, to be such that the longitudinal central axis of the passage zone of the longitudinal metal products always lies on plane Y.

Therefore, when it is necessary to change the size of the products to be welded, the following operations are performed:
- lateral access by the operator to the area of the clamping means;
- disassembly of the pads at least from the lower clamping means 4, 7;
- mounting of new pads at least on said lower clamping means 4, 7.

In a further variant of the invention (not shown), the second upsetting cylinder 24 is arranged completely below the lower clamping means 4, 7, i.e. below the lower end of the lower clamps, of the first clamping means 3, 4, and the second clamping means 6, 7. In this case, the walkway 20 may be provided without the need to provide step 21.

Optionally, a walking surface for the operator comprises both the walkway 20, arranged parallel to the feeding direction X, and two further walkways 22, arranged orthogonally to walkway 20 at the ends thereof so as to define a substantially U-shaped walking surface which allows the operator to also move laterally to the two structures 2 and 5.

At least one infeed guide 17 and at least one outfeed guide 18 are optionally provided for the infeed and outfeed of the metal products to/from the welding machine, each guide being constrained to a respective structure 2, 5 along the feeding axis X. Alternatively, said guides could be part of carriage 1. The guides 17, 18 may be arranged below a respective walkway 22, when provided.

In a first embodiment of the invention, the first structure 2 and the second structure 5 are supported, and possibly also contained, within a first part 10 of carriage 1 delimited by a first beam 9 and a second beam 8 of the carriage that are parallel to each other and to the feeding direction X; while the at least one transformer 36 is fixed to carriage 1 and supported, and possibly also contained, entirely within a second part 11 of carriage 1 arranged laterally outside the first part 10. The first upsetting cylinder 23 is arranged on the first part 10 of the carriage in a position between the at least one transformer 36 and the structures 2 and 5, and therefore in a position between the second part 11 of the carriage and the structures 2 and 5.

Transformer 36 may be a single transformer. Alternatively, a group of transformers may be provided, which concur to electrically supply the clamps 3, 4, 6, 7 by means of conductors 37, 38, 39, 40.

In a variant (not shown) of this first embodiment, there are, e.g. provided two or more transformers fixed to carriage 1 and supported, and possibly also contained, entirely within said second part 11.

In this first embodiment of the invention, the second part 11 of carriage 1 may be delimited by said second beam 8 and a third beam 14 of carriage 1, preferably parallel to the second beam 8. The first beam 9 and the third beam 14 are peripheral beams of carriage 1, while the second beam 8 is an intermediate beam. At least two further peripheral beams, which are transverse, preferably perpendicular, to the beams 9, 8, 14, may be provided to define the perimeter of carriage 1 together with the beams 9 and 14.

Carriage 1 is preferably arranged on two sliding guides 15, 16 fixed, either directly or by means of frames, on a floor below the welding machine, said sliding guides being parallel to each other and to axis X. In the variant illustrated in Figures 1 to 3, the first beam 9 and the second beam 8 of carriage 1 are positioned at a respective sliding guide 16, 15. In this case, the first part 10 of carriage 1 is above and at an area delimited by the sliding guides 15, 16.

Alternatively, the beams 9, 8 could also be offset with respect to the sliding guides 16, 15.

Optionally, the conductors 37, 38 and 39, 40 connect the transformer 36 to the first clamping means 3, 4 and the second clamping means 6, 7, respectively, passing underneath the first structure 2 and the second structure 5, respectively, to have both the space between the first clamping means 3, 4 and the space between the second clamping means 6, 7 freely accessible from below and above in the absence of longitudinal metal products to be welded.

Advantageously, since transformer 36 is not arranged over the structures 2 and 5, both the space between the first clamping means 3, 4 and the space between the second clamping means 6, 7 are freely accessible both from above and below in the absence of longitudinal metal products to be welded.

In the variant (not shown) providing two or more transformers in the second part 11 of carriage 1, e.g. only two arranged one on the other, a first upper conductor and a first lower conductor come out of the respective transformer and reach the clamps 3, 4, respectively, of the first structure 2; while a second upper conductor and a second lower conductor come out of the respective transformer and reach the clamps 6, 7, respectively, of the second structure 5.

In all the variants, the path of the currents is such that the two circuits are closed between the upper clamps 3 and 6 and the respective lower clamps 4 and 7.

In addition to being arranged substantially parallel to each other, preferably, the first structure 2 and the second structure 5 are arranged transversely, preferably orthogonally, both to the first beam 9 and the second beam 8.

In particular, in a first variant, the first beam 9 and the second beam 8 have a respective first portion, proximal to the first structure 2 and to which said first structure 2 is integrally fixed, and a respective second portion, distal from the first structure 2 and to which the second structure 5 is slidingly connected.

In a variant of the invention, the second portion of the first beam 9 is inserted in a first through hole of the second structure 5 (Figure 1) internally provided with first rollers or pads 12 for the sliding of the second structure 5 on the first beam 9; and the second portion of the second beam 8 is inserted in a second through hole of the second structure 5 provided internally with second rollers or pads 13 (Figure 1) for the sliding of the second structure 5 on the second beam 8.

Should it be necessary or desired to move the two structures 2, 5 slightly to prevent the metal product, e.g. the billet, from dragging on the lower clamps, a second variant (not shown) provides for the first structure 2 and the second structure 5 to be supported in the first part 10 of carriage 1 not by means of the beams 8 and 9 of the carriage itself, but instead by means of a lifting system adapted to lift together said first structure 2 and said second structure 5 relative to carriage 1, by means of a rotation along a plane which is transverse to the feeding direction X. Such a rotation may be in the range of 1° to 25°, e.g. 1° to 15°. Thus, this lifting system makes it possible to move the structures 2 and 5 relative to the product to be welded.

Said lifting system preferably is of the linkage type.

A further advantage of the invention may be that of making carriage 1 provided with at least one motor 31 connected to a toothed wheel 32 adapted to engage a rack 33 provided on at least one of the sliding guides 15, 16 (Figure 2), preferably on one of the sides of the sliding guide 15.

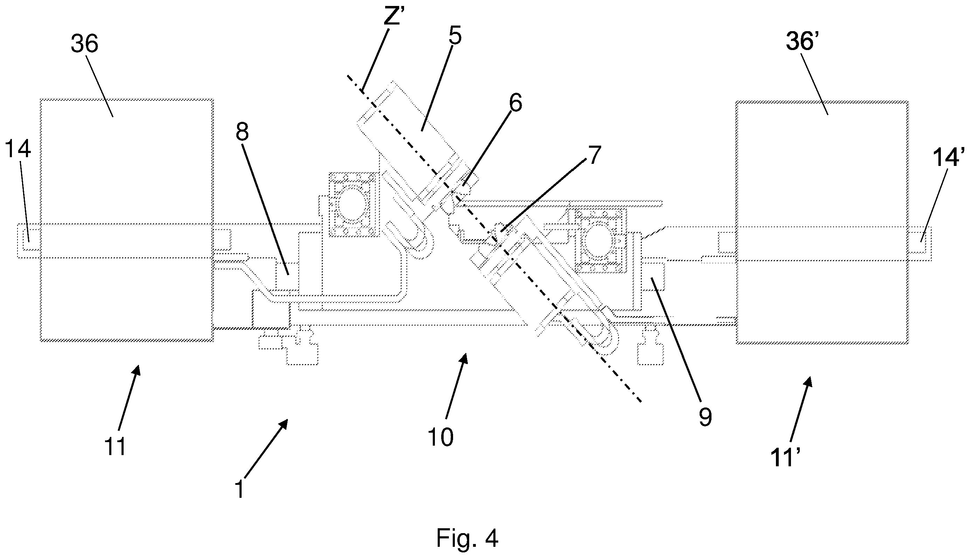

A second embodiment of the welding machine of the invention is shown in Figure 4. The description provided above for the first embodiment also applies to this second embodiment. The latter differs from the first embodiment in that it provides for:
- a first transformer 36 fixed to carriage 1 and supported, and possibly also contained, entirely within the second part 11 of carriage 1, arranged laterally outside the first part 10 delimited by the first beam 9 and the second beam 8;
- and a second transformer 36' fixed to carriage 1 and supported, and possibly also contained, within a third part 11' of carriage 1 arranged laterally outside the first part 10, opposite to the second part 11.

The first part 10 of carriage 1 is delimited by the first beam 9 and the second beam 8 of carriage 1 that are parallel to the feeding direction X.

The second part 11 of carriage 1 is delimited by said second beam 8 and by a third beam 14 of carriage 1, preferably parallel to the second beam 8.

The third part 11' of carriage 1 is delimited by said first beam 9 and by a fourth beam 14', preferably parallel to the first beam 9.

The fourth beam 14' and the third beam 14 are peripheral beams of carriage 1, while the first beam 9 and the second beam 8 are intermediate beams of the carriage.

At least two further peripheral beams, which are transverse, preferably perpendicular, to the beams 14', 9, 8, 14, are provided to define the perimeter of carriage 1 together with the beams 14' and 14.

In this second embodiment, an upper conductor and a lower conductor come out of the first transformer 36 and reach the upper clamps 3 and 6, respectively, of the structures 2 and 5; while an upper conductor and a lower conductor come out of the second transformer 36' and reach the lower clamps 4 and 7, respectively, of the structures 2 and 5. Also in this case, the path of the current is such that the two circuits are closed between the upper clamps 3 and 6 and between the lower clamps 4 and 7, respectively.

## Claims

1. A welding machine, preferably of the flash welding type, for welding the tail of a first longitudinal metal product together with the head of a second longitudinal metal product along a feeding direction X of said longitudinal metal products, the machine comprising a carriage (1) adapted to slide along the feeding direction X, said carriage (1) supporting
- a first structure (2) connected to said carriage (1);
- first clamping means (3, 4), provided on said first structure (2), for clamping the tail of the first metal product or the head of the second metal product;
- a second structure (5) slidable with respect to both the first structure (2) and the carriage (1) parallel to the feeding direction;
- second clamping means (6, 7), provided on said second structure (5), for clamping the head of the second metal product or the tail of the first metal product;
- at least one transformer (36) provided with conductors connected to the first clamping means (3, 4) and the second clamping means (6, 7), respectively, to supply electric current to said tail and said head;
wherein the first structure (2) and the second structure (5) are supported in a first part (10) of the carriage (1) delimited by a first beam (9) and a second beam (8) of the carriage (1) that are parallel to the feeding direction (X), while the at least one transformer (36) is fixed to the carriage (1) and supported in a second part (11) of the carriage (1), arranged laterally outside the first part (10),
wherein the first structure (2) and the second structure (5) define a respective longitudinal axis (Z, Z') inclined, with respect to a horizontal plane, by a first acute angle;
wherein there are provided two upsetting cylinders (23, 24) arranged parallel to said feeding direction X to move the second structure (5) either towards or away from the first structure (2) along the feeding direction X,
wherein the axes of the two upsetting cylinders (23, 24) define a plane Y passing through a passage zone of the longitudinal metal products along the feeding direction X, said passage zone being delimited by said first clamping means (3, 4) and second clamping means (6, 7);
wherein a first upsetting cylinder (23) is arranged, at one side relative to said passage zone, at least partially under a first side of the first structure (2) and of the second structure (5), while a second upsetting cylinder (24) is arranged at a further side relative to said passage zone, at the foot of a second side of the first structure (2) and of the second structure (5), opposite to the first side,
**characterized in that** said plane Y is inclined, with respect to said horizontal plane, by a second acute angle less than said first acute angle and different from zero.

2. A machine according to claim 1, wherein the first upsetting cylinder (23) is arranged at a higher height than the second upsetting cylinder (24).

3. A machine according to claim 1 or 2, wherein the lower clamping means (4, 7) of said first clamping means (3, 4) and said second clamping means (6, 7) occupy a fixed position; wherein the upper horizontal plane (W) tangent to the second upsetting cylinder (24) is arranged above the upper end (19) of the lower clamping means (4, 7); and wherein the distance between said upper horizontal plane (W) and said upper end (19) is preferably less than 20 mm, more preferably less than 15 mm.

4. A machine according to claim 3, wherein the lower clamping means (4, 7) define a horizontal flat surface (25) for supporting the metal product; and wherein the distance between said upper horizontal plane (W) and said horizontal flat surface (25) is in a range of 100 to 150 mm, preferably 110 to 140 mm.

5. A machine according to claim 1 or 2, wherein said second upsetting cylinder (24) is arranged completely under the lower clamping means (4, 7) of said first clamping means (3, 4) and said second clamping means (6, 7).

6. A machine according to any one of the preceding claims, wherein the lower clamping means (4, 7) of said first clamping means (3, 4) and said second clamping means (6, 7) occupy a fixed position; and wherein the size, in particular the thickness, of the pads of the clamping means (3, 6, 4, 7), preferably of the lower clamping means (4, 7), is such that the longitudinal central axis of the longitudinal metal product passage zone along the feeding direction X lies on the plane Y, said passage zone being delimited by the lower clamping means (4, 7) and the upper clamping means (3, 6) in their metal product clamping position.

7. A machine according to claim 3 or 4 or 5 or 6, wherein there is provided a removable walkway (20) arranged above said second upsetting cylinder (24) and proximal to said lower clamping means (4, 7); preferably wherein at least one step (21) is provided between said walkway (20) and said lower clamping means (4, 7).

8. A machine according to any of the preceding claims, wherein said first acute angle is comprised in a range of 40° to 70°, while said second acute angle is less than or equal to 30°.

9. A machine according to any one of the preceding claims, wherein only one transformer (36) or two or more transformers completely supported in said second part (11) of the carriage (1) are provided; or wherein at least two transformers are provided, a first transformer (36) of said two transformers being fixed to the carriage (1) and supported in said second part (11) of the carriage (1), and a second transformer (36') of said two transformers being fixed to the carriage (1) and supported in a third part (11') of the carriage (1) arranged laterally outside the first part (10), on a side opposite to the second part (11).

10. A machine according to claim 1 or 9, wherein said second part (11) is delimited by said second beam (8) and by a third beam (14) of the carriage (1), preferably parallel to the feeding direction (X).

11. A machine according to claim 10, wherein, in the case of only one transformer (36) or two transformers completely supported in the second part (11), the first beam (9) and the third beam (14) are peripheral beams of the carriage (1), while the second beam (8) is an intermediate beam; or wherein, in the case of a first transformer (36) supported in the second part (11) and a second transformer (36') supported in the third part (11') of the carriage (1), said third part (11') is delimited by said first beam (9) and a fourth beam (14'), the fourth beam (14') and the third beam (14) being peripheral beams of the carriage (1), while the first beam (9) and the second beam (8) are intermediate beams of the carriage.

## Patentansprüche

1. Schweißmaschine, vorzugsweise vom Abbrennstumpfschweiß-Typ, zum Verschweißen des Endes eines ersten länglichen Metallprodukts mit dem Kopf eines zweiten länglichen Metallprodukts entlang einer Zuführrichtung X der länglichen Metallprodukte, wobei die Maschine einen Schlitten (1) umfasst, der zum Gleiten entlang der Zuführrichtung X geeignet ist, wobei der Schlitten (1) trägt
- eine erste Struktur (2), die mit dem Schlitten (1) verbunden ist;
- erste Klemmmittel (3, 4), die an der ersten Struktur (2) vorgesehen sind, um das Ende des ersten Metallprodukts oder den Kopf des zweiten Metallprodukts einzuklemmen;
- eine zweite Struktur (5), die sowohl in Bezug auf die erste Struktur (2) als auch auf den Schlitten (1) parallel zu der Zuführrichtung verschiebbar ist;
- zweite Klemmmittel (6, 7), die an der zweiten Struktur (5) vorgesehen sind, um den Kopf des zweiten Metallprodukts oder das Ende des ersten Metallprodukts einzuklemmen;
- mindestens einen Transformator (36), der mit Leitern versehen ist, die jeweils mit den ersten Klemmmitteln (3, 4) und den zweiten Klemmmitteln (6, 7) verbunden sind, um das Ende und den Kopf mit elektrischem Strom zu versorgen;
wobei die erste Struktur (2) und die zweite Struktur (5) in einem ersten Teil (10) des Schlittens (1) getragen sind, der durch einen ersten Träger (9) und einen zweiten Träger (8) des Schlittens (1) begrenzt ist, die parallel zu der Zuführrichtung (X) verlaufen, während der mindestens eine Transformator (36) an dem Schlitten (1) befestigt und in einem zweiten Teil (11) des Schlittens (1) getragen ist, der seitlich außerhalb des ersten Teils (10) angeordnet ist,
wobei die erste Struktur (2) und die zweite Struktur (5) jeweils eine Längsachse (Z, Z') definieren, die in Bezug auf eine horizontale Ebene um einen ersten spitzen Winkel geneigt ist;
wobei zwei Stauchzylinder (23, 24) vorgesehen sind, die parallel zu der Zuführrichtung X angeordnet sind, um die zweite Struktur (5) entlang der Zuführrichtung X entweder in Richtung auf die erste Struktur (2) zu oder von dieser weg zu bewegen,
wobei die Achsen der beiden Stauchzylinder (23, 24) eine Ebene Y definieren, die durch eine Durchgangszone der länglichen Metallprodukte entlang der Zuführrichtung X verläuft, wobei die Durchgangszone von den ersten Klemmmitteln (3, 4) und den zweiten Klemmmitteln (6, 7) begrenzt ist;
wobei ein erster Stauchzylinder (23) auf einer Seite relativ zu der Durchgangszone zumindest teilweise unter einer ersten Seite der ersten Struktur (2) und der zweiten Struktur (5) angeordnet ist, während ein zweiter Stauchzylinder (24) auf einer weiteren Seite relativ zu der Durchgangszone am Fuß einer zweiten Seite der ersten Struktur (2) und der zweiten Struktur (5), gegenüber der ersten Seite, angeordnet ist,
**dadurch gekennzeichnet, dass** die Ebene Y in Bezug auf die horizontale Ebene um einen zweiten spitzen Winkel geneigt ist, der kleiner als der erste spitze Winkel und ungleich Null ist.

2. Maschine nach Anspruch 1, wobei der erste Stauchzylinder (23) in einer höheren Höhe als der zweite Stauchzylinder (24) angeordnet ist.

3. Maschine nach Anspruch 1 oder 2, wobei die unteren Klemmmittel (4, 7) der ersten Klemmmittel (3, 4) und der zweiten Klemmmittel (6, 7) eine feste Position einnehmen; wobei die obere horizontale Ebene (W), die tangential zu dem zweiten Stauchzylinder (24) ist, über dem oberen Ende (19) der unteren Klemmmittel (4, 7) angeordnet ist; und wobei der Abstand zwischen der oberen horizontalen Ebene (W) und dem oberen Ende (19) vorzugsweise weniger als 20 mm, noch bevorzugter weniger als 15 mm, beträgt.

4. Maschine nach Anspruch 3, wobei die unteren Klemmmittel (4, 7) eine horizontale ebene Fläche (25) zum Tragen des Metallprodukts definieren; und wobei der Abstand zwischen der oberen horizontalen Ebene (W) und der horizontalen ebenen Fläche (25) in einem Bereich von 100 bis 150 mm, vorzugsweise 110 bis 140 mm, liegt.

5. Maschine nach Anspruch 1 oder 2, wobei der zweite Stauchzylinder (24) vollständig unter den unteren Klemmmitteln (4, 7) der ersten Klemmmittel (3, 4) und der zweiten Klemmmittel (6, 7) angeordnet ist.

6. Maschine nach einem der vorhergehenden Ansprüche, wobei die unteren Klemmmittel (4, 7) der ersten Klemmmittel (3, 4) und der zweiten Klemmmittel (6, 7) eine feste Position einnehmen; und wobei die Größe, insbesondere die Dicke, der Polster der Klemmmittel (3, 6, 4, 7), vorzugsweise der unteren Klemmmittel (4, 7), derart beschaffen ist, dass die Längsmittelachse der Durchgangszone für längliche Metallprodukte entlang der Zuführrichtung X auf der Ebene Y liegt, wobei die Durchgangszone durch die unteren Klemmmittel (4, 7) und die oberen Klemmmittel (3, 6) in ihrer Metallprodukt-Klemmposition begrenzt ist.

7. Maschine nach Anspruch 3 oder 4 oder 5 oder 6, wobei ein abnehmbarer Laufsteg (20) vorgesehen ist, der über dem zweiten Stauchzylinder (24) und in der Nähe der unteren Klemmmittel (4, 7) angeordnet ist; vorzugsweise wobei mindestens eine Stufe (21) zwischen dem Laufsteg (20) und den unteren Klemmmitteln (4, 7) vorgesehen ist.

8. Maschine nach einem der vorhergehenden Ansprüche, wobei der erste spitze Winkel in einem Bereich von 40° bis 70° liegt, während der zweite spitze Winkel kleiner oder gleich 30° ist.

9. Maschine nach einem der vorhergehenden Ansprüche, wobei nur ein Transformator (36) oder zwei oder mehr Transformatoren vorgesehen sind, die vollständig in dem zweiten Teil (11) des Schlittens (1) getragen sind; oder wobei mindestens zwei Transformatoren vorgesehen sind, wobei ein erster Transformator (36) der beiden Transformatoren an dem Schlitten (1) befestigt und in dem zweiten Teil (11) des Schlittens (1) getragen ist, und ein zweiter Transformator (36') der beiden Transformatoren an dem Schlitten (1) befestigt und in einem dritten Teil (11') des Schlittens (1) getragen ist, der seitlich außerhalb des ersten Teils (10) auf einer dem zweiten Teil (11) gegenüberliegenden Seite angeordnet ist.

10. Maschine nach Anspruch 1 oder 9, wobei der zweite Teil (11) durch den zweiten Träger (8) und durch einen dritten Träger (14) des Schlittens (1) begrenzt ist, vorzugsweise parallel zu der Zuführrichtung (X).

11. Maschine nach Anspruch 10, wobei im Fall von nur einem Transformator (36) oder zwei vollständig in dem zweiten Teil (11) getragenen Transformatoren der erste Träger (9) und der dritte Träger (14) Umfangsträger des Schlittens (1) sind, während der zweite Träger (8) ein Zwischenträger ist; oder wobei im Fall eines ersten Transformators (36), der in dem zweiten Teil (11) getragen ist, und eines zweiten Transformators (36'), der in dem dritten Teil (11') des Schlittens (1) getragen ist, der dritte Teil (11') durch den ersten Träger (9) und einen vierten Träger (14') begrenzt wird, wobei der vierte Träger (14') und der dritte Träger (14) Umfangsträger des Schlittens (1) sind, während der erste Träger (9) und der zweite Träger (8) Zwischenträger des Schlittens sind.

## Revendications

1. Machine de soudage, de préférence du type soudage par étincelage, pour souder la queue d'un premier produit métallique longitudinal avec la tête d'un deuxième produit métallique longitudinal le long d'une direction d'alimentation X desdits produits métalliques longitudinaux, la machine comprenant un chariot (1) adapté pour coulisser le long de la direction d'alimentation X, ledit chariot (1) supportant
- une première structure (2) reliée audit chariot (1) ;
- des premiers moyens de serrage (3, 4), prévus sur ladite première structure (2), pour serrer la queue du premier produit métallique ou la tête du deuxième produit métallique ;
- une deuxième structure (5) pouvant coulisser par rapport à la première structure (2) et au chariot (1) parallèlement à la direction d'alimentation ;
- des deuxièmes moyens de serrage (6, 7), prévus sur ladite deuxième structure (5), pour serrer la tête du deuxième produit métallique ou la queue du premier produit métallique ;
- au moins un transformateur (36) muni de conducteurs reliés aux premiers moyens de serrage (3, 4) et aux deuxièmes moyens de serrage (6, 7), respectivement, pour alimenter en courant électrique ladite queue et ladite tête ; dans laquelle la première structure (2) et la deuxième structure (5) sont supportées dans une première partie (10) du chariot (1) délimitée par une première poutre (9) et une deuxième poutre (8) du chariot (1) qui sont parallèles à la direction d'alimentation (X), tandis que l'au moins un transformateur (36) est fixé au chariot (1) et supporté dans une deuxième partie (11) du chariot (1), disposée latéralement à l'extérieur de la première partie (10),
dans laquelle la première structure (2) et la deuxième structure (5) définissent un axe longitudinal respectif (Z, Z') incliné, par rapport à un plan horizontal, d'un premier angle aigu ;
dans laquelle deux cylindres de refoulement (23, 24) sont prévus, disposés parallèlement à ladite direction d'alimentation X pour déplacer la deuxième structure (5) soit vers la première structure (2) soit à l'écart de celle-ci le long de la direction d'alimentation X,
dans laquelle les axes des deux cylindres de refoulement (23, 24) définissent un plan Y passant par une zone de passage des produits métalliques longitudinaux le long de la direction d'alimentation X, ladite zone de passage étant délimitée par lesdits premiers moyens de serrage (3, 4) et deuxièmes moyens de serrage (6, 7) ;
dans laquelle un premier cylindre de refoulement (23) est disposé, d'un côté par rapport à ladite zone de passage, au moins partiellement sous un premier côté de la première structure (2) et de la deuxième structure (5), tandis qu'un deuxième cylindre de refoulement (24) est disposé d'un autre côté par rapport à ladite zone de passage, au pied d'un deuxième côté de la première structure (2) et de la deuxième structure (5), opposé au premier côté,
**caractérisée en ce que** ledit plan Y est incliné, par rapport audit plan horizontal, d'un deuxième angle aigu inférieur audit premier angle aigu et différent de zéro.

2. Machine selon la revendication 1, dans laquelle le premier cylindre de refoulement (23) est disposé à une hauteur plus élevée que le deuxième cylindre de refoulement (24).

3. Machine selon la revendication 1 ou 2, dans laquelle les moyens de serrage inférieurs (4, 7) desdits premiers moyens de serrage (3, 4) et desdits deuxièmes moyens de serrage (6, 7) occupent une position fixe ; dans laquelle le plan horizontal supérieur (W) tangent au deuxième cylindre de refoulement (24) est disposé au-dessus de l'extrémité supérieure (19) des moyens de serrage inférieurs (4, 7) ; et dans laquelle la distance entre ledit plan horizontal supérieur (W) et ladite extrémité supérieure (19) est de préférence inférieure à 20 mm, plus préférablement inférieure à 15 mm.

4. Machine selon la revendication 3, dans laquelle les moyens de serrage inférieurs (4, 7) définissent une surface plate horizontale (25) pour supporter le produit métallique ; et dans laquelle la distance entre ledit plan horizontal supérieur (W) et ladite surface plate horizontale (25) est dans une plage de 100 à 150 mm, de préférence de 110 à 140 mm.

5. Machine selon la revendication 1 ou 2, dans laquelle ledit deuxième cylindre de refoulement (24) est disposé complètement sous les moyens de serrage inférieurs (4, 7) desdits premiers moyens de serrage (3, 4) et desdits deuxièmes moyens de serrage (6, 7).

6. Machine selon l'une quelconque des revendications précédentes, dans laquelle les moyens de serrage inférieurs (4, 7) desdits premiers moyens de serrage (3, 4) et desdits deuxièmes moyens de serrage (6, 7) occupent une position fixe ; et dans laquelle la taille, en particulier l'épaisseur, des patins des moyens de serrage (3, 6, 4, 7), de préférence des moyens de serrage inférieurs (4, 7), est telle que l'axe central longitudinal de la zone de passage de produit métallique longitudinale le long de la direction d'alimentation X se trouve sur le plan Y, ladite zone de passage étant délimitée par les moyens de serrage inférieurs (4, 7) et les moyens de serrage supérieurs (3, 6) dans leur position de serrage de produit métallique.

7. Machine selon la revendication 3 ou 4 ou 5 ou 6, dans laquelle une passerelle amovible (20) est prévue, disposée au-dessus dudit deuxième cylindre de refoulement (24) et à proximité desdits moyens de serrage inférieurs (4, 7) ; de préférence dans laquelle au moins un gradin (21) est prévu entre ladite passerelle (20) et lesdits moyens de serrage inférieurs (4, 7).

8. Machine selon l'une quelconque des revendications précédentes, dans laquelle ledit premier angle aigu est compris dans une plage de 40° à 70°, tandis que ledit deuxième angle aigu est inférieur ou égal à 30°.

9. Machine selon l'une quelconque des revendications précédentes, dans laquelle seulement un transformateur (36) ou deux ou plusieurs transformateurs complètement supportés dans ladite deuxième partie (11) du chariot (1) sont prévus ; ou dans laquelle au moins deux transformateurs sont prévus, un premier transformateur (36) desdits deux transformateurs étant fixé au chariot (1) et supporté dans ladite deuxième partie (11) du chariot (1), et un deuxième transformateur (36') desdits deux transformateurs étant fixé au chariot (1) et supporté dans une troisième partie (11') du chariot (1) disposée latéralement à l'extérieur de la première partie (10), sur un côté opposé à la deuxième partie (11).

10. Machine selon la revendication 1 ou 9, dans laquelle ladite deuxième partie (11) est délimitée par ladite deuxième poutre (8) et par une troisième poutre (14) du chariot (1), de préférence parallèle à la direction d'alimentation (X).

11. Machine selon la revendication 10, dans laquelle, dans le cas d'un seul transformateur (36) ou de deux transformateurs complètement supportés dans la deuxième partie (11), la première poutre (9) et la troisième poutre (14) sont des poutres périphériques du chariot (1), tandis que la deuxième poutre (8) est une poutre intermédiaire ; ou dans laquelle, dans le cas d'un premier transformateur (36) supporté dans la deuxième partie (11) et d'un deuxième transformateur (36') supporté dans la troisième partie (11') du chariot (1), ladite troisième partie (11') est délimitée par ladite première poutre (9) et une quatrième poutre (14'), la quatrième poutre (14') et la troisième poutre (14) étant des poutres périphériques du chariot (1), tandis que la première poutre (9) et la deuxième poutre (8) sont des poutres intermédiaires du chariot.
